# EUROPEAN PATENT APPLICATION

(11) **EP 1 589 445 A1**
(43) Date of publication of application: **26.10.2005**
(21) Application number: 03701765.4
(22) Date of filing: 17.01.2003
(51) Int. Cl.: G06F 17/60

(54) **PURCHASE MOTIVATION ANALYSIS SUPPORT APPARATUS, METHOD, AND PROGRAM**

(71) Applicant: FUJITSU LIMITED, Kawasaki-shi, Kanagawa 211-8588 (JP)
(72) Inventor: MOROO, Jun, c/o FUJITSU LIMITED, Kawasaki-shi, Kanagawa 211-8588 (JP)
(74) Representative: Stebbing, Timothy Charles
(86) International application number: PCT/JP2003/000352
(87) International publication number: WO 2004/066176

(57) **Abstract**

Each of sites 1a to 1c makes public the web page on which an advertisement image handled by a merchandise sales site (server 3) is posted. When each user has an incentive to purchase the merchandise by the advertisement image while referring to the web page from the user terminals 2a to 2c, he or she moves to the merchandise sales site by clicking the advertisement image, etc. The access source extracting and storing unit 11 of the server 3 extracts and stores link source information each time there is an access moved from the sites 1a to 1c by clicking the advertisement image. Then, for each predetermined period of time, the counting unit 12 counts a number of accesses gained by the advertisement image for each advertisement image and the counted result display unit 13 displays the counted results.

## Description

### Technical Field

The present invention relates to an apparatus and a method, etc. for supporting the analysis of the effects of advertisements, etc. in respect of purchase behaviors and for reflecting the analysis results on rewards, etc.,

### Background Art

Conventionally, merchandise has been advertised by posting a photo, illustration, promo words, etc. of the merchandise on a paper medium such as a catalogue, an advertising circular, a magazine, etc.

In recent years, advertisements have been posted on Internet web pages. In respect of these advertisements, the invention described in, for example, Japanese patent application laid-open publication number 2002-74177 (hereinafter, referred to as patent literature 1) offers a method of paring payroll costs by posting advertisements on the Internet. Furthermore, this invention makes it possible to browse a desired advertisement by retrieving an advertisement on a web page to be used for advertisement retrieval. Still furthermore, this invention offers a method of counting the number of times enlarging, browsing, etc. occurs of a merchandise in which a user is interested among the merchandises posted on the retrieved advertisement page (for example, advertisement page of ABC store), thereby offering the counted results to a client who asks the publishing of an advertisement.

It has become commonplace to lead a user to a merchandise sales site by clicking an advertisement image (photo of a merchandise, etc.) on a web page on which advertisements are posted.

Additionally, another method of optically reading out a photo, etc. that is printed on a paper medium using a scanner, etc. and obtaining a code (or a URL, etc.) that is embedded in the photo using a steganography technology, thereby leading a user to a site of the URL (merchandise sales site) is disclosed (refer to the identification of US patent No.5841978; hereinafter, referred to as patent literature 2).

Meanwhile, an advertiser (merchandise distributor) wishes to know which advertisement is effective for selling merchandises, that is, how far each advertisement has an effect on a user's purchase behavior.

If a photo advertisement is taken as an example, the visual effect of a photo of the merchandise largely affects a user's motivation for the purchase of the merchandise. If an advertiser asks a plurality of photographers to take photos of the same merchandise and the respective photos are posted on the advertisement, same purchase behaviors cannot be always obtained (on the contrary, it is natural that there arises a difference). The same holds true for an illustration, a CG image, a character (promo word, etc.) in addition to photos. Therefore, it is natural that there arises a difference in effect on a purchase behavior due to the taste, skill, ability, etc. of each preparer of an advertisement although the same merchandise is advertised.

In the method of the above-described patent literature 1, which advertisement on a certain advertisement page a user is interested in is counted but it is not determined whether or not the advertisement influences a user's purchase behavior.

Meanwhile, an advertiser wishes to know who is an able preparer but it is difficult to objectively and precisely evaluate a preparer. Therefore, the preparer' s ability cannot be always justly reflected on his or her reward.

The subject of the present invention is to offer an apparatus, a method and a program for a purchase motivation analysis, for supporting the analysis of the appeal power of each advertisement to the purchase behavior and judging advertisement effects objectively and precisely, thereby judging a preparer' s ability of the advertisement objectively and precisely; and also for reflecting the analysis results on each preparer' s reward, thereby justly reflecting the preparer' s ability on his or her reward.

### Disclosure of Invention

The first purchase motivation analysis supporting apparatus of the present invention is configured to comprise an access source extracting and storing unit for extracting and storing a link source URL each time there is an access from a web page having an advertisement image to a merchandise sales site by clicking the advertisement image; a first correspondence relation storing unit for storing a correspondence-relation between each advertisement image and the link source URL; and a counting unit for counting, for each advertisement image, the number of accesses to the merchandise sales site by clicking the advertisement image based on the stored contents of the first correspondence relation storing unit and the access source extracting and storing unit.

The purchase motivation analysis supporting apparatus which is configured in the above-mentioned way counts the number of accesses to a merchandise sales site for each advertisement image by clicking the advertisement image that is posted on the web page of another optional site. That is, the apparatus counts the number of accesses assumed as the accesses performed by users who are interested in the purchase of the merchandise and are lead to the merchandise sales site by clicking the advertisement image. In this way, it becomes possible to objectively and precisely judge whether the appeal power of an advertisement image to a purchase behavior is strong/weak by comparing the counted results or the like.

Meanwhile, an advertisement image includes the photo, illustration, CG image, character (promo word, etc.) etc. of a merchandise and all of them reflect a preparer's ability.

The second purchase motivation analysis supporting apparatus is configured to comprise an access source extracting and storing unit for extracting and storing a link source URL each time there is an access moved from a web page having an advertisement image to a merchandise sales site by clicking the advertisement image; a first correspondence relation storing unit for storing a correspondence relation between each advertisement image and the link source URL; and a counting unit for giving a point and counting the points for each advertisement image in accordance with the number of accesses to the merchandise sales site by clicking the advertisement image based on the stored contents of the first correspondence relation storing unit and the access source extracting and storing unit or in accordance with the number of merchandise purchases after the access.

In respect of the point, a higher point is given, for example, in the case where the merchandise sales site is accessed and the merchandise is actually purchased in comparison with the case where the merchandise sales site is only accessed and no merchandise is purchased.

In the second purchase motivation analysis supporting apparatus, it is assumed that the appeal power of an advertisement image to a purchase behavior is strong in the case where the merchandise sales site is not only accessed but also the merchandise is actually purchased, and accordingly a high point is given. Then, by counting points for each advertisement image and comparing the counted results, it becomes possible to objectively and precisely judge whether the advertisement image has a strong/weak appeal power to a purchase behavior.

The third purchase motivation analysis supporting apparatus is configured to comprise an access source extracting and storing unit for extracting and storing, based on an identification code that is embedded using a steganography technology in an advertisement image printed on a paper medium, the identification code each time there is an access that includes the identification code to a merchandise sales site; a second correspondence relation storing unit for storing a correspondence relation between each advertisement image and the identification code; and a counting unit for counting, for each advertisement image, the number of accesses to the merchandise sales site by clicking the advertisement image based on the stored contents of the first correspondence relation storingunit and the access source extracting and storing unit.

According to the above-configured third purchase motivation analysis supporting apparatus, advertisements can be posted not only on a web page but also on a paper medium. That is, the third purchase motivation analysis supporting apparatus can objectively and precisely judge whether the advertisement image has a strong/weak appeal power to a purchase behavior or whose advertisement image has a strong/weak appeal power to a purchase behavior based on the counted results obtained by counting the number of accesses in the same way as in the first purchase motivation analysis supporting apparatus in the case where a merchandise sales site is accessed based on the information obtained by reading the advertisement image printed on a catalogue, an advertising circular, etc. on a user side using a scanner, etc.

The fourth purchase motivation analysis supporting apparatus of the present invention is configured to comprise an access source extracting and storing unit for extracting and storing, based on the identification code that is embedded in an advertisement image printed on a paper medium using a steganography technology, the identification code each time there is an access that includes the identification code to a merchandise sales site; the second correspondence relation storing unit for storing a correspondence relation between each advertisement image and the identification code; and a counting unit for giving a point and counting the points for each advertisement image in accordance with the number of accesses to the merchandise sales site by clicking the advertisement image based on the stored contents of the first correspondence relation storing unit and the access source extracting and storing unit or in accordance with the number of merchandise purchases after the access.

The fourth purchase motivation analysis supporting apparatus having the above-mentioned configuration corresponds to the advertisement printed on a paper medium in the same way as in the third purchase motivation analysis supporting apparatus. Furthermore, it gives a point and counts the points in the same way as in the second purchase motivation analysis supporting apparatus.

Furthermore, for example, any one of the above-mentioned first to fourth purchase motivation analysis supporting apparatuses may be configured to comprise the third correspondence storing unit for storing a correspondence relation between each advertisement image and the preparer; and a reward deciding unit for deciding the reward to each preparer in accordance with the stored contents of the third correspondence storing unit and the number of accesses or the point that is obtained by the counting unit.

Conventionally, a preparer' s ability is not always reflected on his or her reward justly. According to any one of the above-mentioned first to fourth purchase motivation analysis supporting apparatuses, however, the appeal power of each advertisement image to a purchase behavior can be objectively and precisely indicated by the number of accesses or the counted results of points. Accordingly, the preparer's ability (advertisement effects) can be justly reflected on his or her reward by deciding his or her reward based on the objective and precise evaluation.

For example, any one of the above-mentioned first to fourth purchase motivation analysis supporting apparatuses may be configured to further comprise the fourth correspondence relation storing unit for corresponding, for each merchandise, one or a plurality of advertisement image/images to the merchandise, wherein the counting unit counts the number of accesses or points of an advertisement image for each merchandise in reference to the fourth correspondence relation storing unit.

In the case where a plurality of advertisement images are prepared by a plurality of preparers for one optional merchandise, advertisement images regarding the one merchandise can be compared with each other by counting the number of accesses or the points for each of a plurality of advertisement images in respect of the one merchandise. Therefore, it becomes much clearer whose advertisement image has a strong or weak appeal power to a purchase behavior, that is, whose ability is high or weak.

The above-mentioned subject can be solved by causing a computer to read out and perform the program from a computer-readable storage medium storing a program for causing a computer to perform the same control as that implemented by each unit of the above-mentioned present invention.

### Brief Description of the Drawings

The present invention can be further clarified by referring to the detailed explanation that is mentioned later together with the following attached drawings.
Fig. 1 is a block diagram showing the configuration/function of a whole network system including a purchase motivation analysis supporting apparatus;
Fig. 2 is a block diagram showing one specific example of the first preferred embodiment;
Fig. 3 (a) is one example of a photo-URL correspondence table;
Fig. 3 (b) is one example of a merchandise-photo correspondence table;
Fig. 4 is a flowchart for explaining the processings of an access source extracting and storing unit in the case of using a point method;
Fig. 5 shows one example of a point table;
Fig. 6 is a block diagram showing one specific example of the second preferred embodiment;
Fig. 7 is a block diagram showing the third preferred embodiment;
Fig. 8 is a flowchart for explaining the processing of a reward deciding unit;
Fig. 9 shows one example of the configuration of a hardware of a computer; and
Fig. 10 shows a storage medium for storing a program and one example of a downloading processing of the program.

### Best Mode of Carrying Out the Invention

The following is the explanation of the preferred embodiments of the present invention by referring to the drawings.

In the following explanation, a "merchandise" includes not only goods treated as objects but also a service, etc.

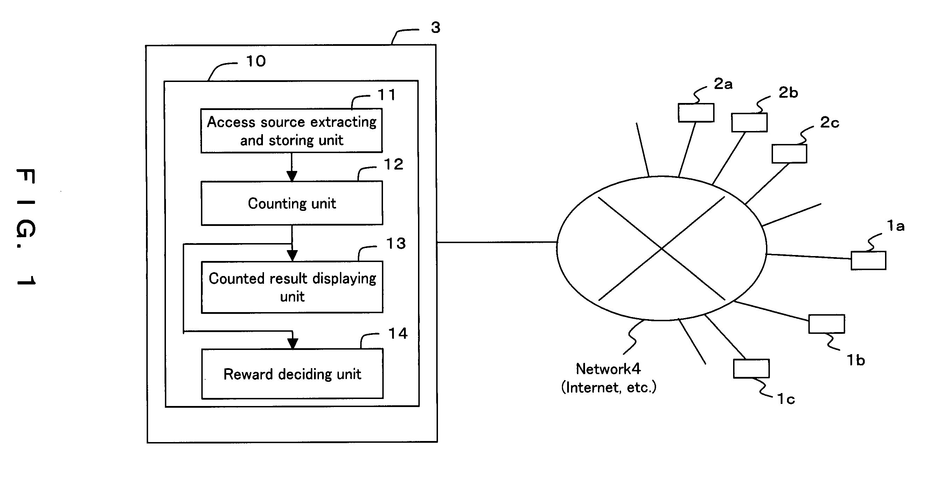

Fig. 1 is a block diagram showing the configuration/function of a whole network system including a purchase motivation analysis supporting apparatus according to the preferred embodiments.

In this drawing, each of sites 1a, 1b, 1c ..., each of user terminals 2a, 2b, 2c ... and a server 3 are connected to a network 4 such as the Internet, etc.

Each of the sites 1a, 1b, 1c ... is a server for making public a web page on the Internet. On this web page, an advertisement image (a photo, illustration, a CG image, a character, etc. (promo words, etc.)) of the merchandise handled by a merchandise sales site (the server 3) that is described later is posted.

Each of the user terminals 2a, 2b, 2c ... is a data processing apparatus (personal computer, etc.) of each user and this apparatus is provided with functions necessary for referring to a web page on the Internet, that is, a browser, a modem, etc.

The server 3 is, for example, a merchandise sales site on the Internet. Furthermore, the server 3 is provided with, for example, a purchase motivation analysis supporting apparatus 10. Meanwhile, the purchase motivation analysis.supporting apparatus 10 may be configured to be provided not only in the server 3 but also in another optional data processing apparatus . Here, an explanation is made for an example in the case where the apparatus 10 is provided in the server 3.

The purchase motivation analysis supporting apparatus 10 that is provided in the server 3 comprises an access source extracting and storing unit 11, a counting unit 12, a counted result displaying unit 13 and a reward deciding unit 14.

The access source extracting and storing unit 11 extracts, each time there is an access to the merchandise sales site, information to identify the advertisement image that is the base of this access and then it stores the thus-extracted information. There are two patterns to gain access to the site.

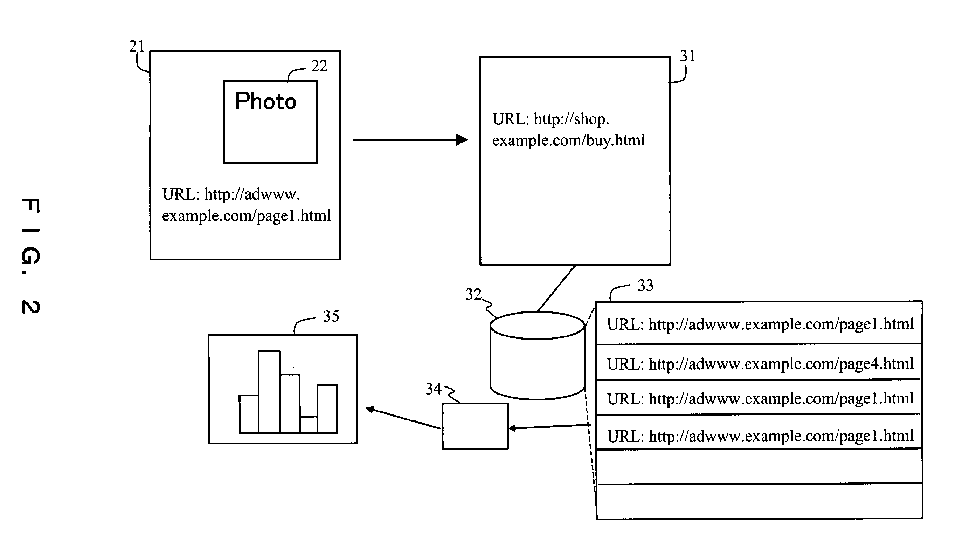

The first pattern is performed in the case where a user firstly refers to a web page on which the advertisement image is posted and is offered by other sites 1a to 1c and then the user clicks the desired advertisement image using a mouse, etc. so that the user moves from the web page to a web page of the merchandise sales site by a hypertext link, which is explained later by referring to Fig. 2.

In this case, the access source extracting and storing unit 11 extracts an URL of the source web page and stores the URL. In the explanation of the preferred embodiment, "click an advertisement image" is explained as one example but a method of gaining access to the site is not limited to this example. For example, a message such as "click here to buy merchandise" is generally displayed below the advertisement image and a user usually is directed to the web page of a merchandise sales site by clicking a part "here". Since the source web page is generally referred to as "a link source", hereinafter this web page is sometimes described as a link source.

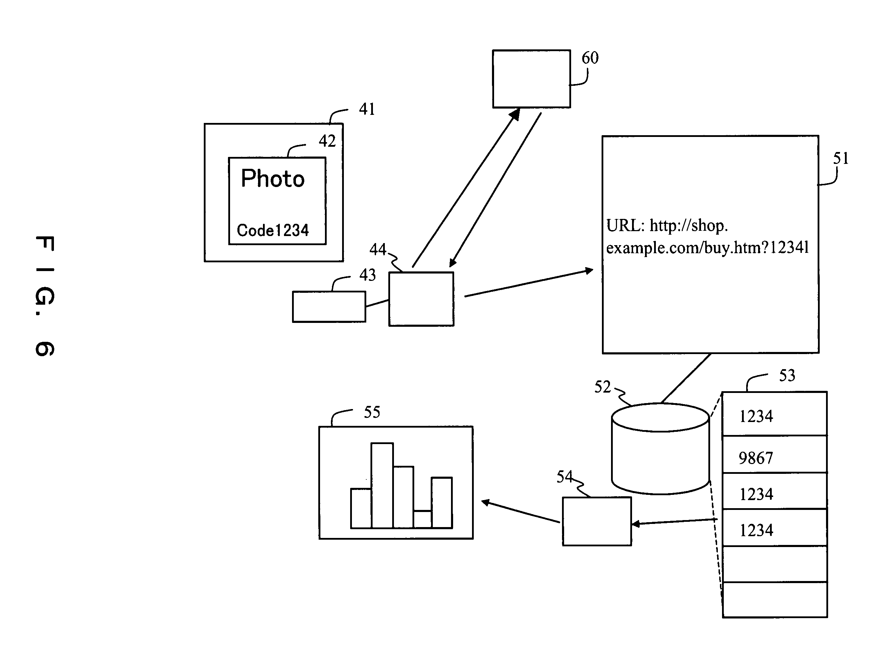

The second pattern is performed in the case where an advertisement image is printed on a paper medium such as an advertising circular, amail-order catalogue, etc., which is explained later by referring to Fig. 6. In this case, a user accesses a merchandise sales site based on the information embedded in an advertisement image using a steganography technology while making use of the system offered by the above-mentioned patent literature 2 (US patent No. 5841978) etc. Meanwhile, it is defined here that not only paper but also plastic, a card, etc. that can be printed are included in a paper medium.

When this technology is briefly explained, the steganography technology is a technology called "a technology for extracting information", "a technology for imperceptualizing information", "a technology for embedding information", "a technology for concealing information", etc. According to this technology, the existence of secret information that a person does not wish to be seen by others is made invisible by embedding this information in other optional data (dummy data) . In order to retrieve the secret information that is embedded in this way, an exclusive program is required on a receiver side. Therefore, it is assumed that the exclusive software is installed in the user terminals 2a, 2b, 2c ...

Here, an advertisement image contains dummy data and in this advertisement image, information about a specific identification code corresponded to each advertisement image, the URL of a merchandise sales site, etc. are embedded using a stenography technology. Then, this advertisement image is printed on a paper medium such as a pamphlet, an advertising circular, etc.

A user reads this advertisement image using a scanner, etc. Then, the user extracts the thus-embedded information from the read image data using exclusive software and accesses a merchandise sales site based on the extracted information.

In the secondpattern, the access source extracting and storing unit 11 extracts and stores the identification code that is embedded in a URL used for the access to the merchandise sales site. That is, the unit stores the information about which advertisement image an access is based on.

In either pattern, the access source extracting and storing unit 11 obtains and stores the information (hereinafter, referred to as access source advertisement identification information) for identifying which advertisement image an access is based on. Then, the counting unit 12 counts the number of accesses for each advertisement image.

Otherwise, in thefirst/second pattern, the access source extracting and storing unit 11 may store points by corresponding the points to the access source advertisement identification information. A "point" means an index value for representing a degree of the contribution to merchandise sale. One point is given, for example, when there is an access to a merchandise sales site and furthermore ten points are given when a merchandise is actually purchased. In this case, the counting unit 12 counts points later for each advertisement image.

The judgment and the reward decision that are made in accordance with counted results and are explained later may be made based on the number of accesses or "points".

The counting unit 12 counts the numbers of accesses or points for each advertisement image based on the information that is stored by the access source extracting and storing unit 11. Otherwise, the unit counts the total number of accesses (or points) for all the advertisement images that are prepared by each preparer. In addition, the numbers of accesses (points) may be classified for each merchandise to be counted.

The counted result displaying unit 13 displays the counted results. At this time, it is desirable to display the counted results in a visually understandable form, for example, with a bar chart.

The operator of a merchandise sales site, a merchandise distributor, a merchandise manufacturer, etc. can objectively and precisely decide whether or not the advertisement image has a stronger appeal power or which preparer has a high ability in respect of a user's purchase behavior by referring to the display contents.

Therefore, it can be expected that advertisement effects can be increased, thereby promoting merchandise sales, for example, by preferentially providing work for a preparer with a higher ability, that is, a preparer who can prepare an advertisement image with a strong appeal power to a purchase behavior.

The reward deciding unit 14 decides the reward to each preparer in accordance with the counted results obtained by the counting unit 12. That is, a preparer who has the greater number of accesses (points) can gain the greater amount of money as reward.

Fig. 2 is a diagram for explaining the specific example of the first pattern (first preferred embodiment).

In Fig. 2, a Web page 21 is a web page which is made public on the sites 1a, 1b, 1c ... and on which an advertisement image is posted. In this example, a photo 22 for advertisement is posted on the Web page 21. In the following, the photo 22 is explained as one example of an advertisement image but as mentioned above, the advertisement image can include various articles such as an illustration, a CG image, a character (promo word), etc.

The Web page 21 directs a user to a sales page 31 that is a web page of the merchandise sales site (server 3) by operating a mouse, etc. and clicking the photo 22.

When there is such an access, the access source extracting and storing unit 11 of the purchase motivation analysis supporting apparatus 10 provided in the server 3 extracts a link source URL and stores this URL in a database 32. Since a link source URL is generally regulated as TTP_Referer, the link source can be defined by referring to this. Meanwhile, software for analyzing link sources and list-displaying the analyzed link sources is already in the market ("web page analysis pack"; BIGLOBE, etc.) . Even in the case where a plurality of photos 22 are posted on the Web page of a link source, any identifier corresponding to each photo is attached to a link source URL (for example, #1 of http://adwww.example.com/page1.html#1). Therefore, on which photo an access is based can be identified by setting a URL registered in a photo-URL correspondence table 36 which is described later to a URL including the above-mentioned identifier (this URL is also one kind of a link source URL).

When the processing of the access source extracting and storing unit 11 is implemented for a certain period of time, a count table 33 in which a plurality of link source URLs is stored is stored in the database 32, for example, as shown in the drawing. Then, for example, in accordance with user' s instruction and operation or for each predetermined period of time, a counting unit 34 obtains how many URLs are stored, for example, for each URL based on the count table 33. This means that the number of accesses to a sales site based on a photo is obtained. Meanwhile, the counting unit 34 corresponds to the counting unit 12 of Fig. 1.

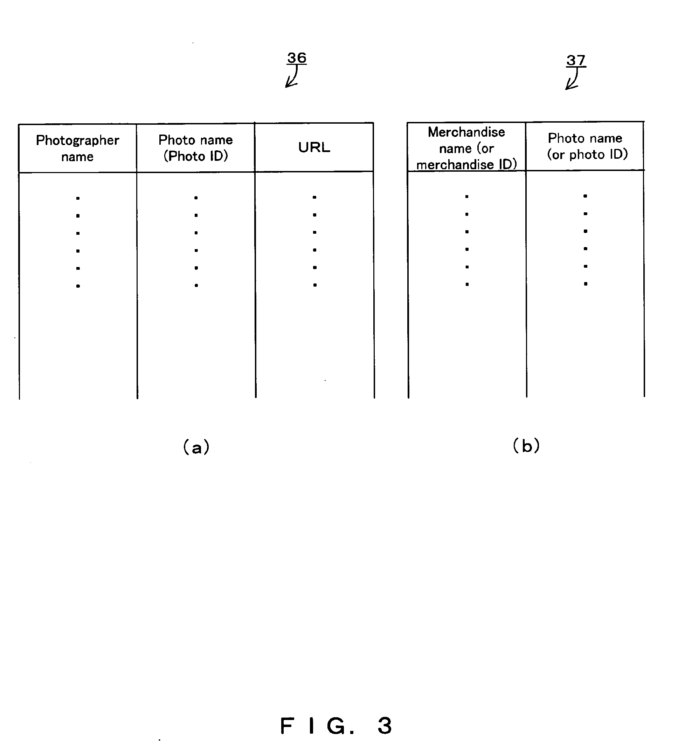

It can be identified which URL corresponds to which photo by referring to the photo-URL correspondence table 36 that is prepared in advance. The photo-URL correspondence table 36 is a table for corresponding a photo name, photo ID, etc. to the URL of a web page on which the photo is posted, thereby storing the correspondence in a table form as shown in Fig. 3(a). Please note that the photo I-D is an identification number that is allocated to each photo in advance. Similarly, merchandise ID that is described later is also an identification number that is allocated to each merchandise in advance.

Furthermore, in consideration of the case where an access is not based on the photo 22, it can be configured in such a way that the access source extracting and storing unit 11 refers to the photo-URL correspondence table 36 and it does not store this URL when the link source URL is not registered. Otherwise, it registers this URL at this stage but the not-registered URL is removed when processing is performed by the counting unit 34. Furthermore, not a link source URL but a photo name, photo ID, etc. that are obtained for referring to the photo-URL correspondence table 36 may be stored in the database 32.

Furthermore, since a photographer's name is also corresponded to a URL in the photo-URL correspondence table 36 as shown in Fig. 3(a), it can be identified who took each picture. Therefore, the counting unit 34 can count the number of accesses to each photographer.

Alternatively, the number of accesses can be counted for each merchandise by preparing a merchandise-photo correspondence table 37 in advance in order to cope with the case where advertisement photos of a plurality of photographers are taken for the same merchandise. Thus, it can be easily figured out, for each merchandise, which photo has the greatest number of accesses. Meanwhile, the merchandise-photo correspondence table 37 is a table for corresponding a merchandise name (or merchandise ID) to a photo name (or photo ID) and for storing the correspondence in a table form.

The counted results are displayed by the counted result displaying unit 13 on a display 35 in a visually understandable manner, for example, with a bar chart, etc.

The operator of a merchandise sales site, a merchandise distributor, a merchandise manufacturer, etc. can objectively and precisely decide which photo has a stronger appeal power or which photographer has a higher ability in respect of a user' s purchase behavior by referring to the display contents.

The number of accesses depends on not only the appeal power of a photo but also the affinity of a merchandise itself. Accordingly, sometimes the number of accesses increases since a merchandise itself is significantly attractive. In the case where the number of accesses is counted for each merchandise, it can be figured out at a glance which photo (which photographer' s photo) has a great number of accesses or small number of accesses so that the ability of a photographer can be compared to be judged. Therefore, it can be expected that the advertisement effect is enhanced, thereby promoting the sales of merchandises by preferentially providing work for a photographer with a higher ability since then, that is, a photographer who can take a picture with a strong appeal power to a purchase behavior.

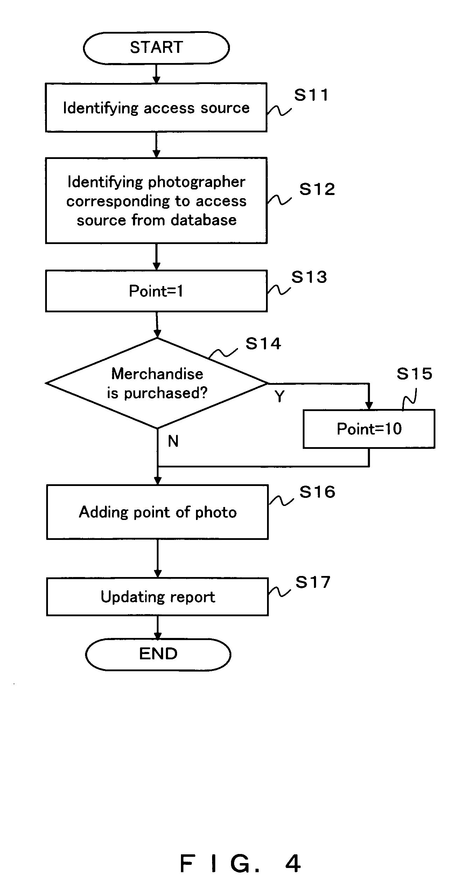

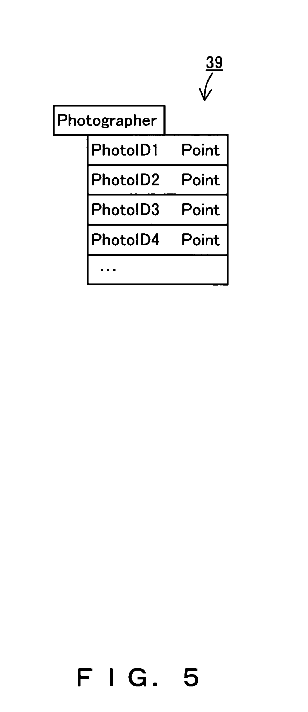

In addition to the above-mentioned method of recoding a URL (or a photo name, etc.) in the database 32 and evaluating the photo using the number of accesses, another method of giving a point and storing the point by making a difference between a case of only an access and that of an actual purchase, thereby evaluating the photo in accordance with the stored points can be applicable. This method is referred to as a point method and this point method is explained by referring to Figs. 4 and 5.

Fig. 4 is a flowchart of explaining the processings of the access source extracting and storing unit 11 in the case where the point method is used.

In Fig.4, a processing of identifying an access source (link source) in step S11, that of identifying an advertisement photo corresponding to the access source in step S12 and that of identifying a photographer of the photo are identical to the processing in the case of counting the number of accesses. Since these processings are already explained, these explanations are omitted here.

Subsequently to the processings in steps S11 and S12, a point "1" is given to the achievement for directing a user to the sale site by clicking the advertisement photo in step S13 and a point "10" is given in the case where a merchandise is actually purchased in YES in step S14. In the case where a merchandise is not purchased, the point remains "1".

When the point is determined, the point is recoded in the database 32 together with a link source URL and the stored points may be counted later by the counting unit 34. Here, in step S16, the newly obtained point is added to the total point that is obtained before using a point table shown in Fig. 5 and then a report is updated in step S17.

Fig. 5 shows one example of a point table.

A point table 39 as shown in the drawing is prepared in advance for each photographer and in the table, photo ID (photo ID1, photo ID2, ...) that is an identification number of each photo taken by the photographer is corresponded to the total point (accumulated value of points that are obtained before) . The initial value of a point is "0".

Then, in the processing in step S16, from the point table 39 of a photographer of a photo that is the current access source, the current total point of this photo is obtained to be added to the decided point, thereby calculating a new total point to be stored in the point table 39.

As mentioned above, a method of giving one point in the case of only an access and ten points in the case of an actual purchase is one example. Therefore, a point system is not limited to this method and for example, a method of giving a point in case of only an access and two points in the case of merchandise purchase or a method of giving ten points in the case of an access and adding one or two more points in the case of a merchandise purchase is also applicable. Since the purchase motivation analysis supporting apparatus 10 of the first preferred embodiment is useful for judging the appeal power, etc. of each photo to a purchase behavior, there is one thought such that a high point is given assuming that an appeal power to a purchase behavior is present in the case of an actual merchandise purchase. However, there is another thought such that the photo has a sufficient appeal power to a purchase behavior to direct a user to a sales site. This thought is derived from a fact that in some cases, the merchandise is not purchased due to, for example, its high price although the photo actually has a strong appeal power to a purchase behavior.

Actually, whether an evaluation method by giving a point or an evaluation method by the number of accesses not by the point method, etc. depends on the concept of an advertisement preparation client so that it cannot be decided which method is the most appropriate. Therefore, an advertisement preparation client (operator of each merchandise sales site or distributor/manufacturer of a merchandise, etc.) may decide the evaluation method.

The following is a specific explanation about the second pattern (second preferred embodiment) by referring to Fig. 6.

In the second preferred embodiment, the processings on a sales site (server 3) side are approximately identical to those of the first preferred embodiment. The second embodiment differs from the first embodiment in that on which photo an access is based is identified not using a link source URL, etc. but using anidentification code that is described later. Therefore, only a different point from the first preferred embodiment is explained and other explanations are omitted, here. In the second preferred embodiment, each user accesses a sales site (server 3) using his/her own data processing apparatus (personal computer, etc.) and making use of a system by a publicly known method that applies a steganography technology, as already explained in Fig. 1. This method is disclosed in the patent literature 2 (identification of US Patent No. 5841978) so that the explanation is made briefly here.

A user's personal computer 44 (2a, 2b, ...) is connected to a scanner 43. An advertisement photo 42 is printed on a paper medium 41 such as an advertising circular, a mail-order catalogue, etc. In the photo 42, an identification code is allocated to the photo, in advance, using a steganography technology. A URL-of a sales site maybe imbeddedbut here only an identification code is imbedded. On the Internet, in response to an inquiry based on the identification code, a URL server 60 for returning the URL of a sales site corresponding to the identification code is provided in advance.

In addition, exclusive software for automatically accessing a specific sales site based on the image data that is read using the scanner 43 is stored in the personal computer 44.

In the above-mentioned configuration, a user optically reads the desired photo 42 using the scanner 43 at first. Then, the exclusive software analyses the thus-read image, extracts the identification code (in the example as shown in the drawing, "1234"), making inquiries to the URL server 60 using the identification code via the network 4 and receives the URL of a sales site of the merchandise in the photo 42, thereby accessing a Web page 51 on the sales site via the network 4. At this time, the software accesses the Web page after imbedding the identification code in the sales site address. Please note that the address of the URL server 60 is registered in the exclusive software in advance.

On a sales site (server 3), the identification code is extracted to be stored in a count table 53 of a database 52. Since it can be identified which identification code corresponds to which photo, if a photo-identification code correspondence table is prepared in advance and the table is referred to, it can be identified which photo an access is based on. A photo-identification code correspondence table is not shown in the drawings but this table is configured in such a way that an identification code is stored instead of a URL of the photo-URL correspondence table 36 of Fig. 3(a).

As for the rest, in the same manner in the first preferred embodiment, a counting unit 54 counts the number of accesses, points, etc. based on the count table 53 and the counted result displaying unit 13 displays the counted results on a display 55. The counting unit 54 corresponds to the counting unit 12 of Fig. 1. In the first and second preferred embodiments, it is explained that the counted results are used for analyzing the appeal power of each photo to a purchase behavior or for objectively and precisely judging the ability of a photographer on an advertisement client side but these counted results may be reflected on the reward to each photographer.

The following is the explanation of this case as the third preferred embodiment.

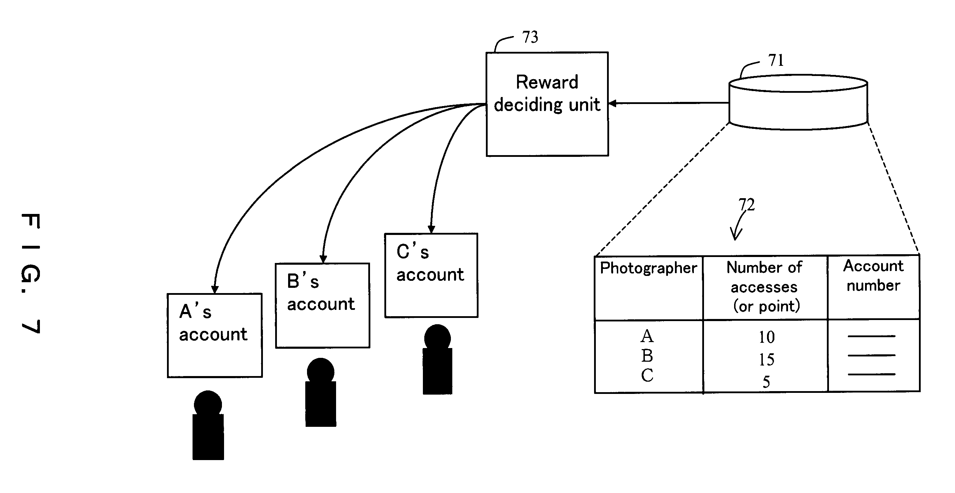

Fig. 7 is a diagram for explaining the third preferred embodiment.

In this drawing, a counted result 72 that is obtained by the counting units (34, 54) of the first and second preferred embodiments is stored in a database 71. In the counted result 72 shown in the drawing, for each photographer, a total value of the numbers of accesses gained based on the photos taken by the photographer is stored. An "account number" is the bank account, etc. of each photographer and it is registered in advance.

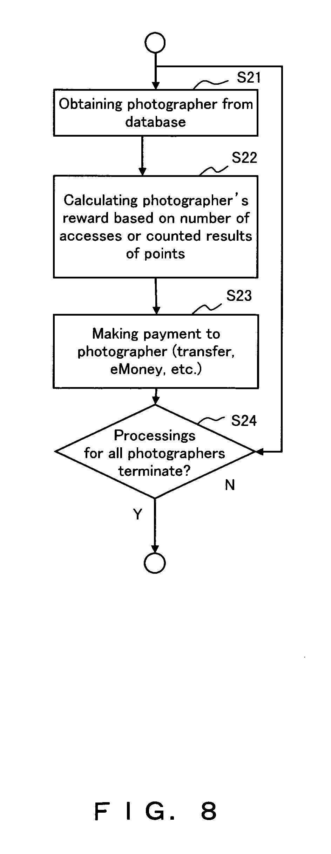

A reward deciding unit 73 decides a reward amount of money to each photographer based on the counted result 72, for example, by implementing the processing as shown in Fig. 8. Furthermore, it is appropriate to make automatic payment (transfer to each account, etc.). Meanwhile, the reward deciding unit 73 may be provided in the purchase motivation analysis supporting apparatus 10 or another optional data processing apparatus. The reward deciding unit 73 corresponds to the reward deciding unit 14 of Fig. 1.

Fig. 8 is a flowchart for explaining the processing of the reward deciding unit 73.

In this drawing, the reward decidingunit 73 firstly refers to the counted result 72 stored in the database 71 and selects a target photographer in step S21, thereby deciding a reward amount of money based on the number of accesses (or points) of this photographer in step S22. There are various ways of deciding a reward amount of money. For example, in the case where ¥10 is paid for each access (or for each point), the reward amount of money for a photographer A is ¥100, that for a photographer B is ¥150 and that for a photographer C is ¥50, in the example of Fig. 7.

Then, the decided amount of money is paid to each photographer. The payment way includes the transfer to an account, eMoney, etc. in step S23.

The above-mentioned processing is repeated until the processing for all the photographers terminates in step S24 .

In this way, it becomes possible to precisely reflect the skill and ability of each photographer on his or her reward.

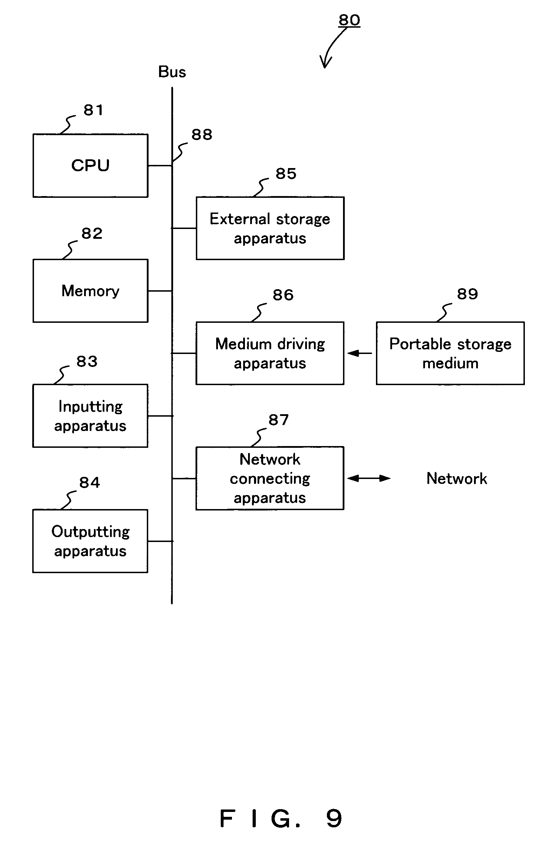

Fig. 9 shows one example of a hardware configuration of a computer (server 3) for realizing the above-mentioned purchase motivation analysis supporting apparatus.

A computer 80 as shown in Fig. 9 includes a CPU 81, a memory 82, an inputting apparatus 83, an outputting apparatus 84, an external storage apparatus 85, a medium driving apparatus 86, a network connecting apparatus 87, etc. and these units are connected via a bus 88. The configuration as shown in this drawing is one example and is not limited to this configuration.

The CPU 81 is a central processing apparatus for controlling the whole computer 80.

The memory 82 is a memory such as a RAM, etc. for temporarily storing the program or data that is stored in the external storage apparatus 85 (or portable storage medium 89) when a program is implemented or data is updated, etc.

The inputting apparatus 83 includes, for example, a keyboard, a mouse, a touch panel, etc.

The outputting apparatus 84 includes, for example, a display, a printer, etc.

The external storage apparatus 85 includes, for example, a hard disk apparatus, etc. and stores a program, data, etc. for realizing the above-mentioned various functions. Additionally, the program, the data, etc. are stored in the portable storage medium 89. Therefore, the medium driving apparatus 8 6 may read out the program, data, etc. that are stored in the portable storage medium 89, thereby causing the computer 80 to implement, for example, the above-mentioned various processing. The portable storage medium 89 includes, for example, aFD (flexible disk), a CD-ROM, a DVD, a magnetooptical disk, etc.

The network connecting apparatus 87 is configured to be connected to a network (Internet, etc.) and be able to send and receive a program, data, etc. to and from an external data processing apparatus.

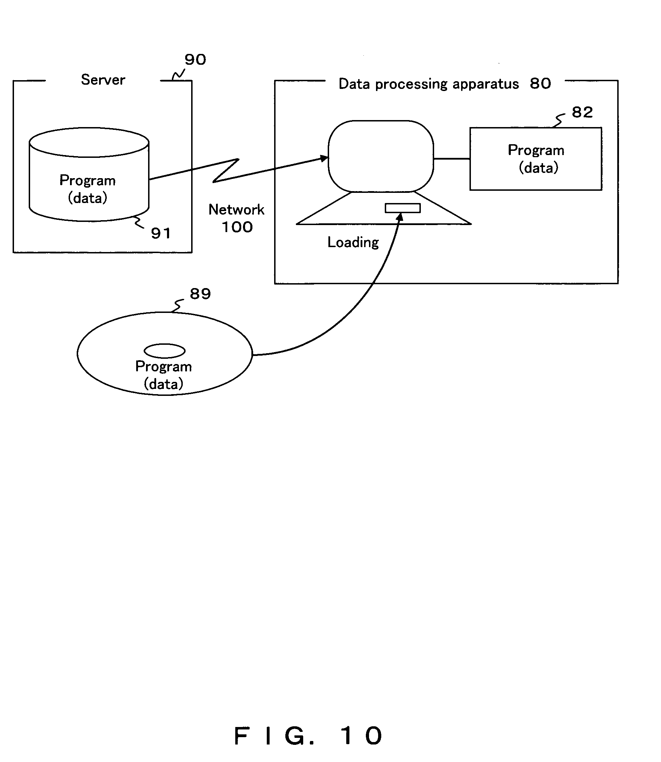

Fig. 10 shows a storage medium for storing the program or one example of downloading the program.

It is appropriate that the portable storage medium 89 storing a program/data for realizing a function of the above-mentioned purchase motivation analysis supporting apparatus is inserted into the main body of the data processing apparatus 80, etc. and the program/data is read out to be stored in the memory 82, thereby implementing the program/data. In addition, it is also appropriate that the program/data is obtained by downloading a program/data 91 that is stored in a server 90 on an external program/data provider side via a network 100 (Internet, etc.) connected by the network connecting apparatus 87.

The present invention is not limited to an apparatus or a method. Therefore, it can be configured as a storage medium (portable storage medium 89, etc.) for storing the program/data and also as a program itself.

### Industrial Applicability

As explained above, according to an apparatus, a method and a program for supporting purchase motivation analysis of the present invention, it becomes possible to support the analysis of an appeal power of each advertisement to a purchase behavior and objectively and precisely judging the advertisement effects, thereby objectively and precisely judging the ability of an advertisement preparer and also possible to reflect analysis results on his or her reward of each advertisement preparer, thereby justly reflect the ability of the preparer on his or her reward.

## Claims

1. A purchase motivation analysis supporting apparatus, comprising:
an access source extracting and storing means for extracting and storing a link source URL each time there is an access moved from a web page having an advertisement image to a merchandise sales site by clicking the advertisement image;
a first correspondence relation storing means for storing a correspondence relation between each advertisement image and the link source URL; and
a counting means for counting, for each advertisement image, a number of accesses to the merchandise sales site by clicking the advertisement image based on stored contents of the first correspondence relation storing means and the access source extracting and storing means.

2. A purchase motivation analysis supporting apparatus, comprising:
an access source extracting and storing means for extracting and storing a link source URL each time there is an access moved from a web page having an advertisement image to a merchandise sales site by clicking the advertisement image;
a first correspondence relation storing means for storing a correspondence relation between each advertisement image and the link source URL; and
a counting means for giving a point and counting the points, for each advertisement image, in accordance with a number of accesses to the merchandise sales site by clicking the advertisement image and/or a number of merchandise purchases after the access, based on stored contents of the first correspondence relation storing means and the access source extracting and storing means.

3. A purchase motivation analysis supporting apparatus, comprising:
an access source extracting and storing means for extracting and storing the identification code that is embedded in an advertisement image printed on a paper medium using a steganography technology, each time there is an access to a merchandise sales site based on an identification code;
a second correspondence relation storing means for storing a correspondence relation between each advertisement image and the identification code; and
a counting means for counting, for each advertisement image, a number of accesses to the merchandise sales site by clicking the advertisement image based on stored contents of the second correspondence relation storing means and the access source extracting and storing means.

4. A purchase motivation analysis supporting apparatus, comprising:
an access source extracting and storing means for extracting and storing the identification code that is embedded in an advertisement image printed on a paper medium using a steganography technology, each time there is an access to a merchandise sales site based on an identification code;
a second correspondence relation storingmeans for storing a correspondence relation between each advertisement image and the identification code; and
a counting means for giving a point and counting the points, for each advertisement image, in accordance with a number of accesses to the merchandise sales site by clicking the advertisement image and/or a number of merchandise purchases after the access, based on stored contents of the second correspondence relation storing means and the access source extracting and/or storing means.

5. The purchase motivation analysis supporting apparatus according to any one of claims 1, further comprising:
a third correspondence relation storing means for storing a correspondence relation between each advertisement image and a preparer thereof; and
a reward deciding means for deciding a reward to each preparer in accordance with store contents of the third correspondence relation storing means and counted results of the number of accesses or points for each advertisement image obtained using the counting means.

6. The purchase motivation analysis supporting apparatus according to any one of claims 1, further comprising
a fourth correspondence relation storingmeans for, for each merchandise, corresponding one advertisement image or a plurality of advertisement images to the merchandise, wherein
the counting means refers to the fourth correspondence storing means and counts, for each merchandise, a number of accesses or points of each advertisement image in respect of the merchandise.

7. The purchase motivation analysis supporting apparatus according to any one of claims 2, wherein
in respect of the point, a high point is given in a case where the merchandise sales site is accessed and then a merchandise is purchased in comparison with a case where the merchandise sales site is only accessed.

8. A purchase motivation analysis supporting method, comprising:
registering a correspondence relation between each advertisement image and a link source URL in advance;
extracting and storing a link source URL each time there is an access moved from a web page having an advertisement image to a merchandise sales site by clicking the advertisement image; and
counting, for each advertisement image, optionally or for each predetermined period of time, a number of accesses to the merchandise sales site moved from the advertisement image by clicking the advertisement image based on the stored link source URL and the registered correspondence relation.

9. A purchase motivation analysis supporting method, comprising:
registering a correspondence relation between each advertisement image and a link source URL in advance;
extracting and storing a link source URL each time there is an access moved from an optional web page having an advertisement image to a merchandise sales site by clicking the advertisement image; and
giving a point and counting the points, for each advertisement image, optionally or for each predetermined period of time, based on the stored link source URL and the registered correspondence relation, in accordance with a number of accesses to the merchandise sales site by clicking the advertisement image and/or a number of merchandise purchases after the access.

10. A purchase motivation analysis supporting method, comprising:
registering a correspondence relation between each advertisement image and an identification code in advance;
extracting and storing the identification code that is embedded in an advertisement image printed on a paper medium using steganography technology, each time there is an access to a merchandise sales site based on an identification code;
counting, for each advertisement image, optionally or for each predetermined period of time, a number of accesses to the merchandise sales site by clicking the advertisement image based on the stored link source URL and the registered correspondence relation.

11. A purchase motivation analysis supporting method, comprising:
registering a correspondence relation between each advertisement image and an identification code in advance;
extracting and storing the identification code that is embedded in an advertisement image printed on a paper medium using steganography technology, each time there is an access to a merchandise sales site based on an identification code; and
giving a point and counting the points for each advertisement image, optionally or for each predetermined period of time, based on the stored link source URL and the registered correspondence relation, in accordance with a number of accesses to the merchandise sales site by clicking the advertisement image and/or a number of merchandise purchases after the access.

12. A computer-readable storage medium storing a program for causing the computer to perform:
registering a correspondence relation between each advertisement image and a link source URL in advance;
extracting and storing the link source URL each time there is an access moved from an optional web page having an advertisement image to a merchandise sales site by clicking the advertisement image; and
counting, for each advertisement image, optionally or for each predetermined period of time, a number of accesses to the merchandise sales site by clicking the advertisement image based on the stored link source URL and the registered correspondence relation. -

13. A computer-readable storage medium storing a program for causing the computer to perform:
registering a correspondence relation between each advertisement image and a link source URL in advance;
extracting and storing the link source URL each time there is an access moved from an optional web page having an advertisement image to a merchandise sales site by clicking the advertisement image; and
giving a point and counting the points for each advertisement image, optionally or for each predetermined period of time, based on the stored link source URL and the registered correspondence relation, in accordance with a number of accesses to the merchandise sales site by clicking the advertisement image and/or a number of merchandise purchases after the access.

14. A computer-readable storage medium storing a program for causing the computer to perform:
registering a correspondence relation between each advertisement image and the identification code in advance;
extracting and storing the identification code that is embedded in an advertisement image printed on a paper medium using steganography technology, each time there is an access to a merchandise sales site based on an identification code; and
counting, for each advertisement image, optionally or for each predetermined period of time, a number of accesses to the merchandise sales site by clicking the advertisement image based on the stored identification code and the registered correspondence relation.

15. A computer-readable storage medium storing a program for causing the computer to perform:
registering a correspondence relation between each advertisement image and the identification code in advance;
extracting and storing the identification code that is embedded in an advertisement image printed on a paper medium using steganography technology, each time there is an access to a merchandise sales site based on an identification code; and
giving a point and counting the points for each advertisement image, optionally or for each predetermined period of time, based on the stored identification code and the registered correspondence relation, in accordance with a number of accesses to the merchandise sales site by clicking the advertisement image and/or a number of merchandise purchases after the access.

16. A program for causing a computer to perform:
registering a correspondence relation between each advertisement image and a link source URL in advance;
extracting and storing the link source URL each time there is an access moved from an optional web page having an advertisement image to a merchandise sales site by clicking the advertisement image; and
counting, for each advertisement image, optionally or for each predetermined period of time, a number of accesses to the merchandise sales site by clicking the advertisement image based on the stored link source URL and the registered correspondence relation.

17. A program for causing a computer to perform:
registering a correspondence relation between each advertisement image and a link source URL in advance;
extracting and storing the link source URL each time there is an access moved from an optional web page having an advertisement image to a merchandise sales site by clicking the advertisement image; and
giving a point and counting the points for each advertisement image, optionally or for each predetermined period of time, based on the stored link source URL and the registered correspondence relation, in accordance with a number of accesses to the merchandise sales site by clicking the advertisement image and/or a number of merchandise purchases after the access.

18. A program for causing a computer to perform:
registering a correspondence relation between each advertisement image and an identification code in advance;
extracting and storing the identification code that is embedded in an advertisement image printed on a paper medium using steganography technology, each time there is an access to a merchandise sales site based on an identification code; and
counting, for each advertisement image, optionally or for each predetermined period of time, a number of accesses to the merchandise sales site by clicking the advertisement image based on the stored identification code and the registered correspondence relation.

19. A program for causing a computer to perform:
registering a correspondence relation between each advertisement image and an identification code in advance;
extracting and storing the identification code that is embedded in an advertisement image printed on a paper medium using steganography technology, each time there is an access to a merchandise sales site based on an identification code; and
giving a point and counting the points for each advertisement image, optionally or for each predetermined period of time, based on the stored identification code and the registered correspondence relation, in accordance with a number of accesses to the merchandise sales site by clicking the advertisement image and/or a number of merchandise purchases after the access.
